# EUROPÄISCHE PATENTANMELDUNG

(11) **EP 0 582 271 A1**
(43) Veröffentlichungstag der Anmeldung: **09.02.1994**
(21) Anmeldenummer: 93112419.2
(22) Anmeldetag: 03.08.1993
(51) Int. Cl.: C02F 7/00, C02F 3/20, B01F 3/04

(54) **Vorrichtung und Verfahren zur Behandlung von Flüssigkeiten**

(71) Anmelder: DANSK BIONIK CENTER ApS, DK-5450 Otterup (DK)
(72) Erfinder: Larsen, Bjarne E., DK-5450 Otterup (DK)
(74) Vertreter: Vonnemann, Gerhard, Dr.-Ing.

(57) **Zusammenfassung**

Die Erfindung betrifft eine Vorrichtung und ein Verfahren zur Behandlung von Flüssigkeit durch Einbringen von Gasen, insbesondere von Luft in Flüssigkeiten. Die Vorrichtung weist einen mit der Flüssigkeit (5) befüllten, vorzugsweise halbschalenförmigen Reaktionsbehälter (1) auf, in dessen unteren Bereich ein durch einen Motor (3) angetriebener Impeller (2) angeordnet ist, der eine im Zentrum abwärts gerichtete, Blasen ziehende Strömung mit Unterdruck erzeugend ausgebildet ist.

## Beschreibung

Die Erfindung betrifft eine Vorrichtung und ein Verfahren zur Behandlung von Flüssigkeit durch Einbringen von Gasen, insbesondere von Luft in Flüssigkeiten.

Bekanntlich werden beispielsweise offene Gewässer durch Einbringen von Luft behandelt. Diese Behandlung dient dazu, umgeschlagene Gewässer durch Einbringen von Luftsauerstoff wieder in ihren ursprünglichen Gleichgewichtszustand zurückzuversetzen. Außerdem ist bekannt, Mikroorganismen durch Einbringen von Sauerstoff oder von Luft ins Abwasser beim Abbau der Nährstoffe zu unterstützen. Beispielsweise sind Verfahren bekannt, die in der Gülle enthaltene Nährstoffe mittels Mikroorganismen unter Zufuhr von Luftsauerstoff abbauen. Um die Luft innerhalb der Flüssigkeit zu verteilen, wird üblicherweise aus der Umgebung Luft durch Leitungen unterhalb des Wasserspiegels unter Druck eingebracht und dort zu Luftblasen verteilt, die ihrem Auftrieb folgend dann zur Oberfläche des Flüssigkeitsspiegels steigen. Auf ihrem Weg zur Oberfläche erfolgt innerhalb dieser Luftblasen der Stoffaustausch zwischen Flüssigkeit und der in der Blase eingeschlossenen Luft.

Der Erfindung liegt die Aufgabe zugrunde, eine andere Vorrichtung zum Einbringen von Gasen in Flüssigkeiten anzugeben.

Diese Aufgabe wird dadurch gelöst, daß die Vorrichtung einen mit der Flüssigkeit befüllten, vorzugsweise halbschalenförmigen, Reaktionsbehälter aufweist, in dessen unteren Bereich ein durch einen Motor angetriebener Impeller angeordnet ist, der eine im Zentrum abwärts gerichtete, Blasen ziehende Strömung mit Unterdruck erzeugend ausgebildet ist. Der Impeller erzeugt innerhalb der Flüssigkeit einen Strudel, in dessen Zentrum ein Unterdruck entsteht, der oberhalb des WasserspiegelS befindliches Gas, meist Luft, in Blasen zentral nach unten zieht. Sobald diese Luftblasen in den tieferen Bereich der Flüssigkeit gelangen, implodieren sie teilweise. Dabei erfolgt ein intensiver, teilweise stoßartiger Gaseintrag in die Flüssigkeit. Dies wird noch unterstützt, sobald die Restblasen von dem Impeller nach außen getragen werden und dadurch in den Bereich höheren Drucks gelangen.

Außerdem wird die Aufgabe durch ein Verfahren zur Behandlung von Flüssigkeit mit einem Flüssigkeitsspiegel durch Einbringen von Gasen, insbesondere von Luft in Flüssigkeit, wobei mit Unterdruck eine sich bis zum Flüssigkeitsspiegel erstreckende Wirbelströmung erzeugt wird, die im Zentrum abwärts gerichtete Blasen zieht, gelöst.

In Ausgestaltung der Erfindung ist vorgesehen, daß der Reaktionsbehälter als oben offene eiförmige Halbschale geformt ist. Diese der Strömung angepaßte Form des Reaktionsbehälters unterstützt das Entstehen einer strudelförmigen Strömung und das Ansaugen des Gases. Zusätzlich wird die entstehende Strömung, der Kontur der Halbschale folgend nach außen geführt. Dabei bildet sich teilweise eine torusförmige Strömung aus, die den Anreicherungsprozeß unterstützt.

Die Maßnahme, daß die Halbschale in einem Gewässer oder in einem Behälter mit einem Abstand zur Flüssigkeitsoberfläche angeordnet ist, vorzugsweise mit 10 bis 80 cm Abstand, dient der Ausbildung eines ausreichend starken Wirbels. Außerdem kann auch immer wieder neue Flüssigkeit aus der Umgebung in die Reaktionszone gelangen.

Zur Behandlung offener Gewässer ist es vorteilhaft, wenn der Reaktionsbehälter in einer Flüssigkeit mittels eines Gestells eingehängt oder aufgestellt ausgebildet ist.

Wenn die Vorrichtung durch ein Netz oder dergleichen geschützt ausgebildet ist, können sich auch Lebewesen, die in die Nähe der Vorrichtung gelangen, nicht verletzen.

Weitere Vorteile, Einzelheiten und erfindungswesentliche Merkmale ergeben sich aus der nachfolgenden Beschreibung einer bevorzugten Ausführungsform der Erfindung unter Bezugnahme auf die beigefügte Zeichnung, wobei funktionsgleiche Teile in den Figuren der Zeichnung mit gleichen Bezugszeichen versehen sind.

Die Figuren zeigen im einzelnen:
- Fig. 1: eine erfindungsgemäße Vorrichtung in schematischer Darstellung zur Erläuterung des Wirkungsprinzips,
- Fig. 2: eine Vorrichtung in geschlossener Form zur Behandlung von Abwasser oder beispielsweise Gülle,
- Fig. 3: eine Aufsicht auf die Vorrichtung gemäß Figur 2,
- Fig. 4: eine Vorrichtung in offener Form zur Behandlung von Gewässern, Seen, Buchten etc. und
- Fig. 5: eine Aufsicht auf die Vorrichtung gemäß Figur 4.

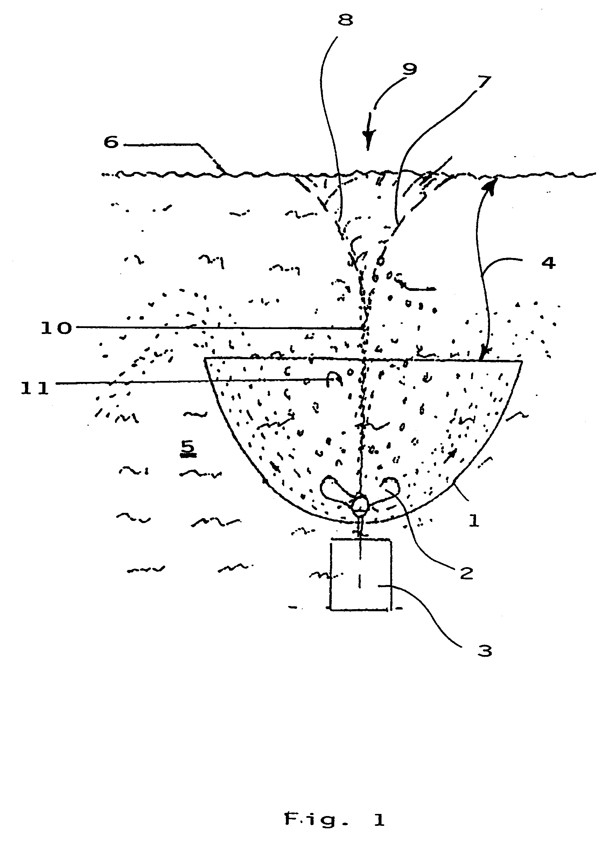

Figur 1 zeigt schematisch die erfindungsgemäße Vorrichtung und ihr Funktionsprinzip. Sie besteht im wesentlichen aus einer oben offenen Halbschale 1, in deren unteren Bereich ungefähr zentrisch ein Impeller 2 angeordnet ist. Dieser Impeller wird angetrieben von einem Motor 3. Diese Vorrichtung ist innerhalb der zu behandelnden Flüssigkeit 5 angeordnet. Der obere Rand der Halbschale 1 ist in einem Abstand 4 zum Flüssigkeitsspiegel angeordnet, der etwa dem Durchmesser der oberen Öffnung der Halbschale 1 entspricht.

Motor 3 treibt den Impeller 2 beispielsweise mit 1 KW Leistung und 6000 U/min an. Die Steigung der Impellerflügel und ihre Drehrichtung ist so gewählt, daß oberhalb des Impellers 2 eine zentrale nach unten gerichtete Strömung entsteht, die einen spiralförmigen Wirbel 7 im Wasser ausbildet. Der Flüssigkeitsspiegel 6 stülpt sich dadurch im zentralen Bereich in Form eines Trichters 8 nach unten aus, in dessen Mitte Luft in Richtung des Pfeils 9 angesaugt wird und in einer Blasenschleppe 10 in tiefere Bereiche befördert wird. Durch die eiförmig ausgebildete Halbschale wird im unteren Bereich dann die Strömung nach außen umgelenkt und teilweise, wie durch Pfeil 11 dargestellt, wieder in den mittleren Bereich zurückbefördert, so daß sich eine torusförmige Strömung ergibt. Auf ihrem Weg entlang der Blasenschleppe 10 implodieren die eingetragenen Luftblasen teilweise, wobei die Luft innerhalb der Flüssigkeit gelöst wird und von darin vorhandenen Mikroorganismen bei ihrem Stoffwechsel verbraucht werden kann. Verwirbelungen innerhalb des Abstandes 4 sorgen für einen steten Austausch der behandelten Flüssigkeit mit der umgebenden Flüssigkeit. Dieser Austausch wird durch überlagerte Querströmungen in offenen Gewässern noch gefördert.

Die Vorrichtung ist zur Behandlung von Gülle und zur Unterstützung von anderen Oxidationsprozessen in Flüssigkeiten geeignet. Durch den intensiven Stoffaustausch wird der biologische Umsatz von Mikroorganismen gesteigert. Die Mikroorganismen selbst werden dabei vorteilhaft geschont.

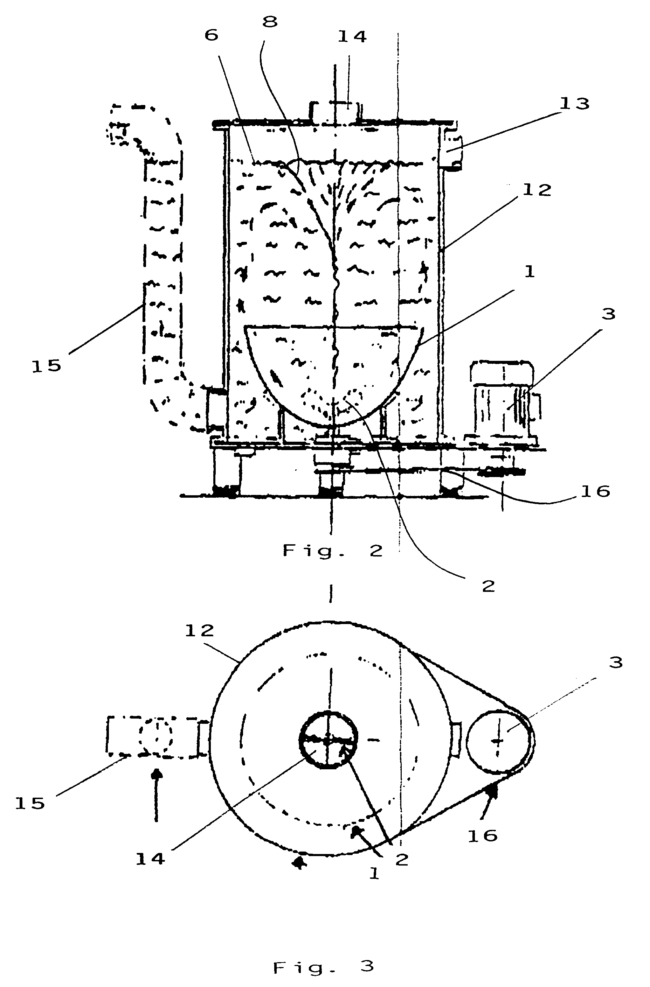

In Figur 2 ist die Vorrichtung innerhalb eines zylindrischen Behälters 12 als Axialschnitt dargestellt. Die zu behandelnde Flüssigkeit, beispielsweise Gülle, läuft durch die oben angeordnete Zulauföffnung 13 zu. Luft wird durch die oben zentral angeordnete Zuluftöffnung 14 angesaugt. Die behandelte Gülle verläßt über eine in unterbrochener Linienführung dargestellte Ablaufleitung 15 den Behälter. Der Impeller 2 wird über einen Riementrieb 16 durch Motor 3 angetrieben.

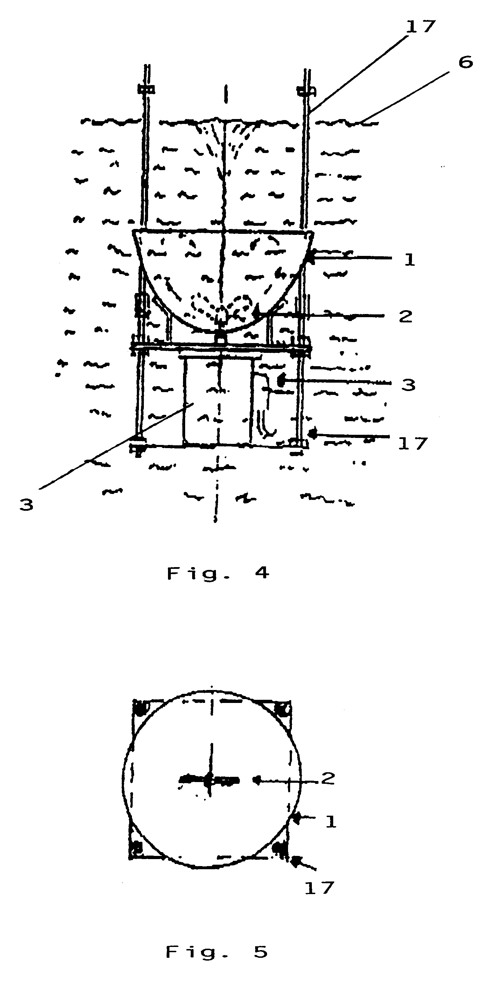

In entsprechender Weise ist die Vorrichtung in Figur 4 als Axialschnitt dargestellt, wie sie vorzugsweise für offene Gewässer ausgestaltet wird. Sie ist an einer Rahmenkonstruktion 17 befestigt, an der sie in ein offenes Gewässer abgesenkt wird. Die Funktionsweise ist prinzipiell wie vorbeschrieben.

Auf diese Weise ist eine Vorrichtung zum Behandeln von Flüssigkeiten geschaffen, die einen intensiveren Stoffaustausch der Reaktionspartner bewirkt.

### BEZUGSZEICHENLISTE

- 1: Halbschale
- 2: Impeller
- 3: Motor
- 4: Abstand
- 5: Flüssigkeit
- 6: Flüssigkeitsspiegel
- 7: Wirbel
- 8: Trichter
- 9: Pfeil
- 10: Blasenschleppe
- 11: Pfeile
- 12: Behälter
- 13: Zulauföffnung
- 14: Zuluftöffnung
- 15: Ablauföffnung
- 16: Riementrieb
- 17: Rahmenkonstruktion

## Patentansprüche

1. Vorrichtung zur Behandlung von Flüssigkeit durch Einbringen von Gasen, insbesondere von Luft in Flüssigkeiten, **dadurch gekennzeichnet,** daß die Vorrichtung einen mit der Flüssigkeit (5) befüllten, vorzugsweise halbschalenförmigen, Reaktionsbehälter aufweist, in dessen unteren Bereich ein durch einen Motor (3) angetriebener Impeller (2) angeordnet ist, der eine im Zentrum abwärts gerichtete, Blasen ziehende Strömung mit Unterdruck erzeugend ausgebildet ist.

2. Vorrichtung zur Behandlung von Flüssigkeit, nach Anspruch 1, **dadurch gekennzeichnet,** daß der Reaktionsbehälter als oben offene eiförmige Halbschale (1) geformt ist.

3. Vorrichtung zur Behandlung von Flüssigkeit, nach Anspruch 1 oder 2, **dadurch gekennzeichnet,** daß der Motor (3) unterhalb der Halbschale (1) oder neben der Halbschale an einer Rahmenkonstruktion (17) angeordnet ist.

4. Vorrichtung zur Behandlung von Flüssigkeit, nach Anspruch 1, 2 oder 3, **dadurch gekennzeichnet,** daß die Halbschale (1) in einem Gewässer oder in einem Behälter mit einem Abstand (4) zur Flüssigkeitsoberfläche (6) angeordnet ist, vorzugsweise mit 10 bis 80 cm Abstand.

5. Vorrichtung zur Behandlung von Flüssigkeit, nach Anspruch 1, 2, 3 oder 4, **dadurch gekennzeichnet,** daß der Reaktionsbehälter in einer Flüssigkeit mittels eines Gestells eingehängt oder aufgestellt ausgebildet ist.

6. Vorrichtung zur Behandlung von Flüssigkeit, nach Anspruch 1, 2, 3, 4 oder 5, **dadurch gekennzeichnet,** daß die Vorrichtung durch ein Netz oder dergleichen geschützt ausgebildet ist.

7. Verfahren zur Behandlung von Flüssigkeit mit einem Flüssigkeitsspiegel durch Einbringen von Gasen, insbesondere von Luft in Flüssigkeit, **dadurch gekennzeichnet,** daß mit Unterdruck eine sich bis zum Flüssigkeitsspiegel erstreckende Wirbelströmung erzeugt wird, die im Zentrum abwärts gerichtete Blasen zieht.
